(19) Europäisches Patentamt

European Patent Office

Office européen des brevets

(11) **EP 3 189 636 B1**

## (12) FASCICULE DE BREVET EUROPEEN

(45) Date de publication et mention de la délivrance du brevet:
**07.11.2018 Bulletin 2018/45**

(21) Numéro de dépôt: **15771674.7**

(22) Date de dépôt: **31.08.2015**

(51) Int Cl.:
*H04L 12/715* (2013.01)     *H04L 12/721* (2013.01)

(86) Numéro de dépôt international:
**PCT/FR2015/052298**

(87) Numéro de publication internationale:
**WO 2016/034797 (10.03.2016 Gazette 2016/10)**

(54) **PROCÉDÉ DE SURVEILLANCE ET D'ALERTE DE CONFIGURATION DE ROUTAGE DANS UN CLUSTER COMPRENANT DES LIENS DE COMMUNICATION STATIQUES ET PROGRAMME D'ORDINATEUR METTANT EN OEUVRE CE PROCÉDÉ**

VERFAHREN ZUR ÜBERWACHUNG UND ZUR WARNUNG VON ROUTING-INFORMATIONEN IN EINEM CLUSTER MIT STATISCHEN KOMMUNIKATIONSLINKS UND COMPUTERPROGRAMM ZUR IMPLEMENTIERUNG DIESES VERFAHRENS

METHOD OF MONITORING AND OF WARNING OF ROUTING CONFIGURATION IN A CLUSTER COMPRISING STATIC COMMUNICATION LINKS AND COMPUTER PROGRAM IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2014 FR 1458250**

(43) Date de publication de la demande:
**12.07.2017 Bulletin 2017/28**

(73) Titulaire: **Bull SAS
78340 Les Clayes-sous-Bois (FR)**

(72) Inventeurs:
• **FICET, Jean-Vincent
F-73110 La Chapelle Blanche (FR)**
• **DUGUE, Sébastien
F-38119 Saint Theoffrey (FR)**

• **GERPHAGNON, Jean-Olivier
F-38450 Vif (FR)**

(74) Mandataire: **Santarelli
49, avenue des Champs-Elysées
75008 Paris (FR)**

(56) Documents cités:
**WO-A1-2011/144848**

• **TORSTEN HOEFLER ET AL: "Optimized Routing for Large-Scale InfiniBand Networks", HIGH PERFORMANCE INTERCONNECTS, 2009. HOTI 2009. 17TH IEEE SYMPOSIUM ON, IEEE, PISCATAWAY, NJ, USA, 25 août 2009 (2009-08-25), pages 103-111, XP031528530, ISBN: 978-0-7695-3847-1**

EP 3 189 636 B1

# Description

La présente invention concerne le routage dans un cluster, c'est-à-dire la détermination de routes de communication entre un ensemble de noeuds du cluster, et plus particulièrement un procédé de surveillance et d'alerte de configuration de routage dans un cluster comprenant des liens de communication statiques ainsi qu'un programme d'ordinateur mettant en oeuvre ce procédé.

Le calcul haute performance, aussi appelé HPC (sigle de *High Performance Computing* en terminologie anglo-saxonne) se développe pour la recherche universitaire comme pour l'industrie, notamment dans des domaines techniques tels que l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en oeuvre sur des systèmes de traitement de données appelés clusters. Un cluster comprend typiquement un ensemble de noeuds interconnectés. Certains noeuds sont utilisés pour effectuer des tâches de calcul (noeuds de calcul), d'autres pour stocker des données (noeuds de stockage) et un ou plusieurs autres gèrent le cluster (noeuds d'administration). Chaque noeud est par exemple un serveur mettant en oeuvre un système d'exploitation tel que Linux (Linux est une marque). La connexion entre les noeuds est, par exemple, réalisée à l'aide de liens de communication Ethernet ou InfiniBand (Ethernet et InfiniBand sont des marques). Un exemple de l'art antérieur se trouve dans le document WO2011/144848. La figure 1 illustre schématiquement un exemple d'une topologie 100 d'un cluster, de type *fat-tree.* Ce dernier comprend un ensemble de noeuds génériquement référencés 105. Les noeuds appartenant à l'ensemble 110 sont ici des noeuds de calcul tandis que les noeuds de l'ensemble 115 sont des noeuds de service (noeuds de stockage et noeuds d'administration). Les noeuds de calcul peuvent être regroupés en sous-ensembles 120 appelés îlots de calcul, l'ensemble 115 étant appelé îlot de service.

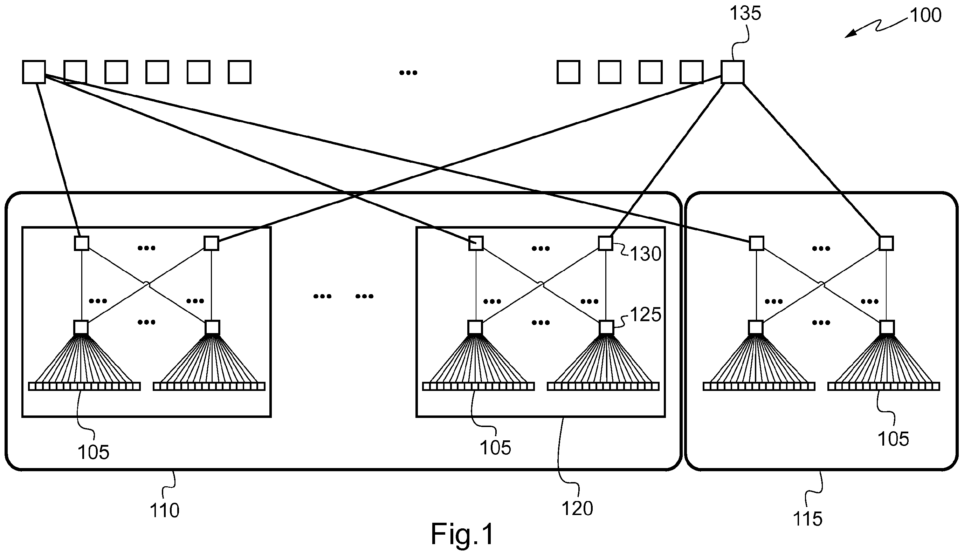

Les noeuds sont reliés les uns aux autres par des commutateurs (appelés *switch* en terminologie anglo-saxonne), par exemple de façon hiérarchique. Dans l'exemple illustré sur la figure 1, les noeuds sont connectés à des commutateurs 125 de premier niveau qui sont eux-mêmes reliés à des commutateurs 130 de deuxième niveau qui sont à leur tour reliés à des commutateurs 135 de troisième niveau.

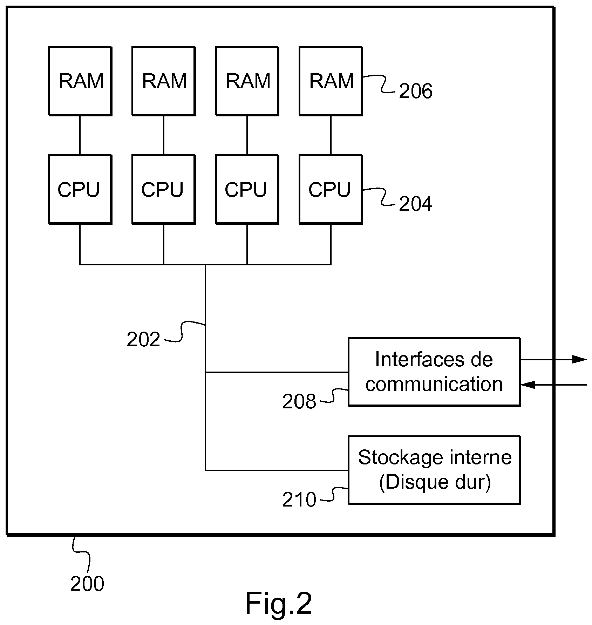

Comme illustré sur la figure 2, chaque noeud comprend généralement un ou plusieurs microprocesseurs, des mémoires locales ainsi qu'une interface de communication. Plus précisément, le noeud 200 comporte ici un bus de communication 202 auquel sont reliés :

- des unités centrales de traitement ou microprocesseurs 204 (ou CPU, sigle de *Central Processing Unit en* terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le noeud 200 dispose en outre ici de moyens de stockage interne 212, tels que des disques durs, pouvant notamment comporter le code exécutable de programmes.

Le bus de communication permet la communication et l'interopérabilité entre les différents éléments inclus dans le noeud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Il est observé ici que les performances d'un cluster sont directement liées au choix des routes permettant le transfert de données entre les noeuds, établies via des liens de communication. De façon générale, des liens de communication physiques sont établis entre les noeuds et les commutateurs lors de la configuration matérielle d'un cluster, les routes de communication étant elles-mêmes déterminées dans une phase d'initialisation à partir d'une définition des connexions devant êtres établies entre les noeuds. Selon la technologie de communication mise en oeuvre, la configuration des routes peut être statique ou dynamique.

A titre d'illustration, la technologie InfiniBand permet, dans un cluster, une configuration statique des routes. Cette configuration utilise des tables statiques de routage (ou LFT, sigle de *Linear Forwarding Table* en terminologie anglo-saxonne) dans chaque commutateur. Lorsque cette technologie est mise en oeuvre, un algorithme de routage tel que les algorithmes connus sous les noms de FTree, MINHOP, UPDN et LASH peut être utilisé.

Le choix de l'algorithme devant être utilisé est typiquement effectué par un administrateur selon, notamment, la topologie du cluster. Il peut s'agir, par exemple, de l'algorithme FTree. Cependant, si l'algorithme choisi ne permet pas d'effectuer le routage, le gestionnaire du cluster (typiquement en charge du routage) choisi en général automatiquement un autre algorithme, par exemple l'algorithme MINHOP (généralement moins performant que celui choisi initialement).

A titre d'illustration et de façon simplifiée, l'algorithme FTree détermine des routes de telle sorte que celles-ci soient réparties autant que possible à travers les liens de communication existants. A ces fins, lors du routage d'un réseau de communication entièrement connecté selon une architecture de type *fat-tree,* chaque noeud du réseau est considéré comme ayant une même importance. Ainsi, lorsqu'une route est établie entre deux noeuds d'un même lien, le nombre de routes utilisant ce lien, appelé la charge du lien, est augmenté de un. Lorsque l'algorithme de routage cherche à établir une nouvelle route et que plusieurs possibilités se présentent, il compare les niveaux de charge associés aux liens sur lesquels sont basées ces possibilités et choisit celle dont les liens ont le niveau de charge le plus faible.

Au cours de l'utilisation du cluster, si un lien ou un élément tel qu'un noeud ou un commutateur subit une défaillance, un nouveau routage est effectué.

La qualité de routage ayant une influence directe sur les performances d'un cluster, il existe un besoin pour surveiller une configuration de routage dans un cluster comprenant des liens de communication statiques et pour, le cas échéant, alerter un administrateur d'un problème potentiel de routage.

L'invention permet de résoudre au moins un des problèmes exposés précédemment.

L'invention a ainsi pour objet un procédé pour ordinateur de surveillance d'au moins un paramètre de routage d'un cluster comprenant une pluralité de noeuds et une pluralité de commutateurs, des liens de communication statiques reliant des noeuds et des commutateurs desdites pluralités de noeuds et de commutateurs, chaque commutateur comprenant une pluralité de ports de sortie, ce procédé étant caractérisé en ce qu'il comprend les étapes suivantes,

- sélection d'au moins un commutateur de ladite pluralité de commutateurs ;
- calcul d'un nombre de routes par port pour chaque port de chaque commutateur sélectionné, des routes étant définies lors d'une étape de routage pour relier chacune un noeud à un autre ;
- calcul d'un nombre moyen de routes par port pour le au moins un commutateur sélectionné ;
- comparaison de chaque nombre de routes par port calculé avec le nombre moyen de routes par port calculé ; et
- en réponse à ladite comparaison, notification d'un déséquilibre potentiel de routage dudit cluster.

Le procédé selon l'invention permet ainsi de détecter et notifier un problème potentiel de routage pouvant provoquer une baisse des performances du cluster.

Selon un mode de réalisation particulier, chaque commutateur comprend une table de routage pour identifier un port selon une caractéristique d'un paquet de données reçu, le procédé comprenant en outre une étape d'obtention d'une table de routage pour chaque commutateur sélectionné, ladite étape de calcul d'un nombre de routes par port pour chaque port de chaque commutateur sélectionné étant basée sur une table de routage obtenue pour chaque commutateur sélectionné.

Selon un mode de réalisation particulier, ladite étape de comparaison de chaque nombre de routes par port avec le nombre moyen de routes par port comprend une étape de calcul de la différence de chaque nombre de routes par port avec le nombre moyen de routes par port et une étape de comparaison de la différence avec au moins un seuil.

Selon un mode de réalisation particulier, ladite étape de calcul de la différence de chaque nombre de routes par port avec le nombre moyen de routes par port est une étape de calcul de la valeur absolue de la différence de chaque nombre de routes par port avec le nombre moyen de routes par port.

Selon un mode de réalisation particulier, la différence entre chaque nombre de routes par port avec le nombre moyen de routes par port est considérée comme étant nulle si elle est négative.

Selon un mode de réalisation particulier, ladite comparaison de la différence avec au moins un seuil comprend une étape de sélection d'un premier ou d'un second seuil selon que la différence est positive ou négative.

Selon un mode de réalisation particulier, le procédé comprend en outre les étapes suivantes :

- identification d'un algorithme sélectionné pour router ledit cluster ;
- identification d'un algorithme utilisé pour router ledit cluster ; et
- si les identifiants dudit algorithme sélectionné et dudit algorithme utilisé pour router ledit cluster sont différents, notification d'un problème potentiel d'optimisation de routage dudit cluster.

Selon un mode de réalisation particulier, le procédé boucle sur lui-même pour identifier un problème potentiel de routage dudit cluster.

Selon un mode de réalisation particulier, le procédé est mis en oeuvre dans un gestionnaire de cluster de type InfiniBand.

L'invention a également pour objet un programme d'ordinateur comprenant des instructions adaptées à la mise en oeuvre de chacune des étapes du procédé décrit précédemment lorsque ledit programme est exécuté sur un ordinateur ainsi qu'un moyen de stockage d'informations, amovible ou non, partiellement ou totalement lisible par un ordinateur ou un microprocesseur comportant des instructions de code d'un programme d'ordinateur pour l'exécution de chacune des étapes du procédé précédemment.

Les avantages procurés par ce programme d'ordinateur et ce moyen de stockage d'informations sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :

- la figure 1 illustre un exemple de topologie d'un cluster ;
- la figure 2 illustre un exemple d'architecture d'un noeud d'un cluster ;
- la figure 3, comprenant les figures 3a et 3b, illustre un exemple de liens entre plusieurs commutateurs lorsque le routage est considéré comme équilibré et lorsqu'il ne l'est pas, respectivement ;
- la figure 4 illustre certaines étapes d'un exemple d'algorithme pour estimer une valeur représentative de l'équilibrage du routage d'un cluster et, le cas échéant, alerter un administrateur d'un potentiel déséquilibre ; et
- la figure 5 illustre certaines étapes d'un exemple d'algorithme pour alerter un administrateur s'il existe un risque de routage ne permettant pas l'exploitation d'un cluster dans ses meilleures conditions.

Il a été observé que la qualité de routage d'un cluster peut être estimée selon l'homogénéité de la répartition des routes sur les liens entre les différents éléments de ce cluster. En d'autres termes, une répartition uniforme des routes sur les liens conduit à une répartition uniforme des charges relatives aux échanges de données à travers le cluster, permettant d'éviter une surutilisation de certains liens et une sous-utilisation d'autres liens, ce qui conduit typiquement à des congestions et à l'augmentation de délais de latence.

La répartition des routes sur les liens représente donc un indice de qualité de routage et plus généralement un indice de qualité d'utilisation des éléments du cluster.

Par ailleurs, il est rappelé que le routage de données dans un réseau de type InfiniBand, sous forme de paquets de données, est basé sur un mécanisme de relais local selon une indication de destination appelée LID (acronyme de *Local IDentifier* en terminologie anglo-saxonne). Ainsi, chaque commutateur InfiniBand (comprenant plusieurs ports d'entrée et plusieurs ports de sortie) décide sur quel port de sortie un paquet doit être transmis en fonction de l'indication de destination (LID) du paquet considéré.

A ces fins, chaque commutateur utilise une table de routage locale appelée LFT (sigle de *Linear Forwarding Table* en terminologie anglo-saxonne). De telles tables, construites durant une étape de routage par un module de routage et transmises à chaque commutateur, établissent un lien entre une indication de destination (LID) d'un paquet de données et un port de sortie du commutateur auquel est associée la table de routage considérée. En d'autres termes, une étape de routage locale d'un commutateur InfiniBand consiste en un ensemble de paires comprenant chacune une indication de routage (LID) et une référence de port de sortie. Un exemple d'une telle table de routage est donné en annexe (Table 1).

Lorsqu'un commutateur InfiniBand reçoit un paquet de données, l'en-tête de ce dernier est analysé pour en déterminer une indication de destination (LID). La table de routage est alors consultée pour déterminer la référence du port de sortie associée à cette indication de destination. Le paquet est alors transmis à sa destination via le port de sortie dont la référence a été déterminée à partir de l'indication de destination. Ainsi, par exemple, si un paquet ayant, dans son en-tête, une indication de destination égale à 28, arrive dans un commutateur InfiniBand dont la table de routage correspond à la table 1 donnée en annexe, ce paquet est retransmis via le port de sortie ayant la référence 25.

Comme indiqué précédemment, le routage d'un cluster de type InfiniBand est statique, ce qui signifie que les routes sont prédictibles et ne changent pas jusqu'à l'arrêt du cluster ou jusqu'à ce qu'un équipement ou un lien connaisse une défaillance conduisant à un re-routage du cluster. Il est typiquement effectué par un module de routage du gestionnaire InfiniBand, appelé *InfiniBand Subnet Manager,* qui est en charge de calculer les tables de routage des commutateurs et de leur transmettre.

Le gestionnaire InfiniBand propose généralement plusieurs algorithmes de routage présentant chacun des caractéristiques particulières. Le choix d'un algorithme est généralement effectué par un administrateur selon la topologie du cluster. Ainsi, par exemple, le choix de l'administrateur peut porter sur l'algorithme connu sous le nom de FTree qui est particulièrement efficace pour des clusters ayant une topologie de type *fat-tree.* Si le gestionnaire InfiniBand échoue dans le routage du cluster avec l'algorithme sélectionné, un algorithme moins performant est automatiquement sélectionné, par exemple l'algorithme connu sous le nom de MinHop.

Lorsqu'il existe plusieurs liens de communication entre deux commutateurs, le routage est considéré comme équilibré, entre ces deux commutateurs, s'il existe un même nombre de routes par lien. Réciproquement, le routage n'est pas considéré comme équilibré s'il n'existe pas un même nombre de routes par lien ou si le nombre de routes par lien varie au-delà d'un seuil prédéterminé ou calculé dynamiquement.

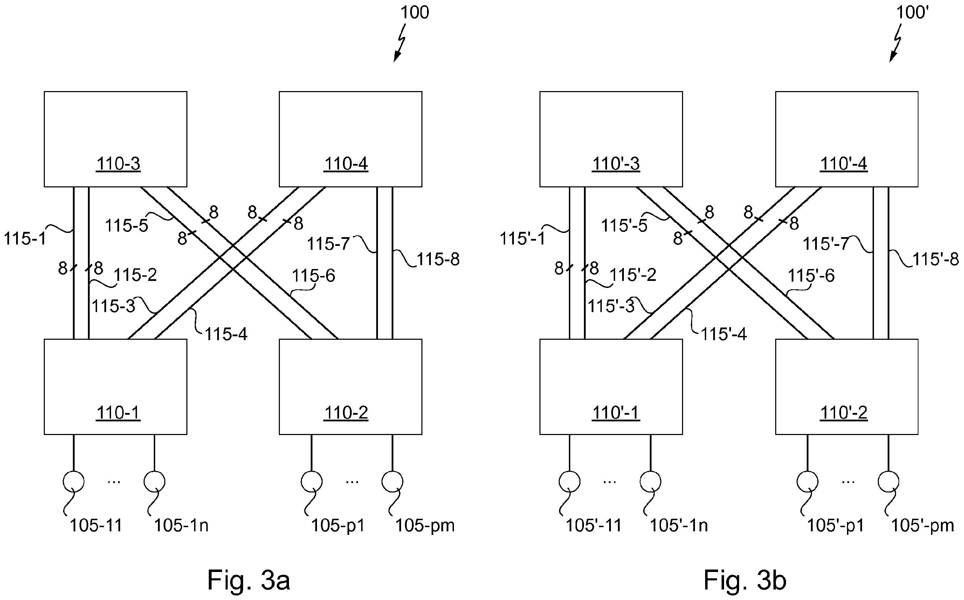

La figure 3, comprenant les figures 3a et 3b, illustre un exemple de liens entre plusieurs commutateurs lorsque le routage est considéré comme équilibré et lorsqu'il ne l'est pas, respectivement.

Comme illustré sur la figure 3a, le cluster 100 comprend ici un premier ensemble de noeuds référencés 105-11 à 105-1n, un deuxième ensemble de noeuds référencés 105-p1 à 105-pm ainsi que quatre commutateurs 110-1 à 110-4. Chaque noeud du premier ensemble est relié au commutateur 110-1 par un lien spécifique. De même, chaque noeud du second ensemble est relié au commutateur 110-2 par un lien spécifique. Le commutateur 110-1 est relié au commutateur 110-3 par deux liens 115-1 et 115-2 et au commutateur 110-4 par deux liens 115-3 et 115-4. De façon symétrique, le commutateur 110-2 est relié au commutateur 110-3 par deux liens 115-5 et 115-6 et au commutateur 110-4 par deux liens 115-7 et 115-8.

Comme indiqué sur la figure 3a, chacun des liens 115-1 à 115-8 comprend 8 routes. Par conséquent, le nombre de routes par lien étant le même pour tous les liens, le routage est considéré comme équilibré.

La figure 3b représente un cluster 100' similaire au cluster 100 illustré sur la figure 3a. Il comprend ici deux ensembles de noeuds (105'-11 à 105'-1n et 105'-p1 à 105'-pm) ainsi que quatre commutateurs (110'-1 à 110'-4). Chaque noeud des premier et second ensembles est relié aux commutateurs 110'-1 et 110'-2, respectivement, par un lien spécifique. Le commutateur 110'-1 est relié aux commutateurs 110'-3 et 110'-4 par les deux liens 115'-1 et 115'-2 et les deux liens 115'-3 et 115'-4, respectivement. De façon symétrique, le commutateur 110'-2 est relié aux commutateurs 110'-3 et 110'-4 par les deux liens 115'-5 et 115'-6 et les deux liens 115'-7 et 115'-8, respectivement.

Comme indiqué sur la figure 3b, les liens 115'-1 et 115'-2 comprennent 4 et 12 routes, respectivement, tandis que chacun des liens 115'-3 à 115'-8 comprend 8 routes. Le nombre de routes par lien n'étant pas le même pour tous les liens, le routage n'est pas considéré comme équilibré.

Ainsi, la qualité de routage d'un cluster est ici déterminée selon la répartition des routes par port de commutateur, pour chaque commutateur, pour tous les commutateurs d'un groupe de commutateurs (par exemple tous les commutateurs directement reliés à un ou plusieurs éléments donnés) ou pour tous les commutateurs du cluster.

A ces fins, selon un mode de réalisation particulier, la table de routage de chaque commutateur est analysée pour calculer le nombre de routes par port, pour chaque port du commutateur considéré. Cette analyse peut être réalisée par le gestionnaire InfiniBand.

A titre d'illustration, la table de routage donnée en annexe (table 1) peut être utilisée pour calculer le nombre de routes affectées à chaque port de sortie du commutateur correspondant. La table 2 donnée en annexe indique le nombre de routes pour chaque port. Comme indiqué, cinq routes sont affectées au port 21, trois routes sont affectées au port 19 et une seule route aux autres ports.

Ainsi, connaissant la table de routage de tous les commutateurs du cluster, le gestionnaire InfiniBand ou un autre module de surveillance peut calculer le nombre de routes affectées à chaque port de sortie de chaque commutateur et en déduire une information d'équilibrage du routage du cluster.

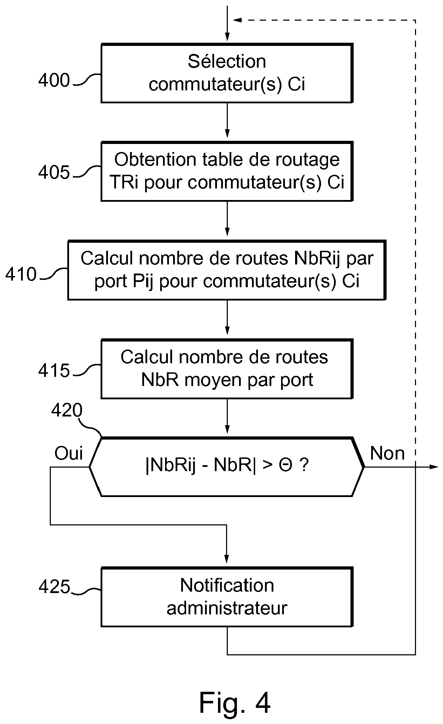

La figure 4 illustre certaines étapes d'un exemple d'algorithme pour estimer une valeur représentative de l'équilibrage du routage d'un cluster et, le cas échéant, alerter un administrateur d'un potentiel déséquilibre. Cet algorithme peut, par exemple, être mis en oeuvre dans un gestionnaire InfiniBand.

Comme illustré, une première étape (étape 400) a pour objet la sélection de commutateurs Ci (i variant de 1 au nombre NbC de commutateurs sélectionnés). La sélection peut viser un seul commutateur, tous les commutateurs d'un groupe (par exemple tous les commutateurs directement reliés à un ou plusieurs éléments donnés) ou tous les commutateurs du cluster. La sélection peut être effectuée automatiquement selon des critères prédéterminés, manuellement par un administrateur ou de façon mixte (une présélection étant par exemple proposée à un administrateur qui peut la valider et, le cas échéant, la modifier).

Dans une étape suivante, la table de routage (TRi) associée à chaque commutateur sélectionné est obtenue (étape 405). Il est observé ici que si l'algorithme est mis en oeuvre dans un gestionnaire InfiniBand, l'obtention de ces tables est rendue particulièrement aisée du fait que c'est le gestionnaire InfiniBand qui les détermine. Si l'algorithme est mis en oeuvre dans un autre module, l'obtention des tables de routage peut être effectuée par requêtes auprès des commutateurs concernés, auprès du ou des modules les ayant créées ou auprès de tout autre dispositif les mémorisant.

Pour chaque commutateur sélectionné, le nombre de routes par port de sortie NbRij (j variant de 1 au nombre NbPi de ports de sortie du commutateur Ci) est calculé à partir de la table de routage associée à ce commutateur (étape 410). Comme indiqué précédemment, le nombre de routes par lien peut être déterminé en comptant le nombre d'indications de destination (LID) différentes associées à un même port de sortie d'un commutateur.

Le nombre moyen de routes par port NbR est ensuite calculé pour l'ensemble des commutateurs sélectionnés (étape 415). Ce nombre est typiquement calculé selon la relation suivante :

$$NbR = \frac{\sum_{i=1}^{NbC} \sum_{j=1}^{NbPi} NbRij}{\sum_{i=1}^{NbC} NbPi}$$

Il est observé ici que la granularité de la valeur représentative de l'équilibrage du routage du cluster est déterminée par l'ensemble des commutateurs sélectionnés.

Comme indiqué sur la figure 4 par la flèche en trait pointillé, l'algorithme peut être répété pour plusieurs ensembles de commutateurs (et donc pour chaque commutateur considéré isolément).

Dans une étape suivante, le nombre de routes NbRij pour chaque port j de chaque commutateur i est comparé au nombre NbR moyen de routes par port (étape 420).

Si la différence entre le nombre de routes NbRij du port j du commutateur i et le nombre NbR moyen de routes par port excède un seuil θ, il est considéré que le routage du cluster est déséquilibré. Dans ce cas, une notification est adressée à un administrateur (étape 425), par exemple sous forme de message électronique. La notification peut comprendre une indication relative au(x) commutateur(s) concerné(s) et, éventuellement, au(x) port(s) de ce ou ces derniers, pour lequel un problème potentiel est détecté.

Le seuil θ au-delà duquel il est considéré que le routage du cluster est déséquilibré est, en théorie proche de zéro. Cependant, en pratique, il est de préférence déterminé par l'administrateur selon la topologie du cluster et sa charge (liée, en particulier, au nombre et à la nature des applications exécutées).

Il est observé ici que s'il apparaît qu'un problème de charge est essentiellement lié à une surcharge d'un lien (lorsque le nombre de routes NbRij du port j du commutateur i est supérieur au nombre NbR moyen de routes par port), pouvant entraîner des congestions et/ou une augmentation des délais de latence, une sous-charge d'un lien (lorsque le nombre de routes NbRij du port j du commutateur i est inférieur au nombre NbR moyen de routes par port) indique qu'il existe une surcharge ailleurs dans le cluster, cette surcharge pouvant ne pas être détectée (du fait d'une répartition de la surcharge sur plusieurs liens).

Naturellement, il est possible de ne détecter que les surcharges (NbRij - NbR > θ), voire les sous-charges (NbR - NbRij > θ), voire encore les surcharges et les sous-charges avec des seuils différents (NbRij - NbR > $\theta_1$ ou NbR - NbRij > $\theta_2$).

Selon un autre mode de réalisation, l'algorithme de routage utilisé est pris en compte pour alerter un administrateur d'un problème potentiel de routage.

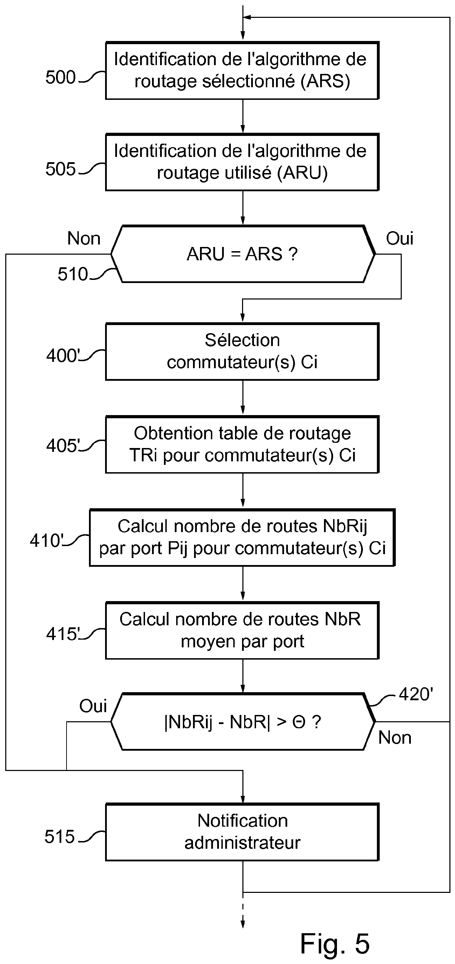

La figure 5 illustre certaines étapes d'un exemple d'algorithme pour alerter un administrateur s'il existe un risque de routage ne permettant pas l'exploitation d'un cluster dans ses meilleures conditions.

En particulier, l'algorithme illustré sur la figure 5 permet d'alerter un administrateur si l'algorithme de routage utilisé n'est pas l'algorithme de routage sélectionné (ou validé) par un administrateur et/ou s'il existe un potentiel déséquilibre de routage dans le cluster. Cet algorithme peut notamment être mis en oeuvre dans un gestionnaire InfiniBand.

Comme illustré, une première étape a ici pour objet d'identifier l'algorithme de routage sélectionné ou validé par un administrateur (ARS) pour router le cluster (étape 500). Un identifiant de cet algorithme sélectionné ou validé peut être obtenu auprès des paramètres de configuration du module d'administration du cluster, par exemple un gestionnaire InfiniBand. Un tel identifiant peut, par exemple, être l'identifiant « FTREE » désignant l'algorithme de routage connu sous le nom de FTree.

Ensuite, avant ou en parallèle, l'algorithme de routage réellement utilisé (ARU) pour router le cluster est identifié (étape 505). A nouveau, un identifiant de cet algorithme utilisé peut être obtenu auprès des paramètres de configuration du module d'administration du cluster, par exemple un gestionnaire InfiniBand. Un tel identifiant peut, par exemple, être l'identifiant « MINHOP » désignant l'algorithme de routage connu sous le nom de MINHOP.

L'identifiant de l'algorithme de routage utilisé est alors comparé à l'algorithme de routage sélectionné (étape 510). Si ces identifiants sont différents, une notification est adressée à un administrateur (étape 515), par exemple sous forme d'un message électronique, indiquant que l'algorithme de routage utilisé n'est pas l'algorithme de routage sélectionné et mentionnant en outre, de préférence, une référence de l'algorithme de routage utilisé (et, de façon optionnelle, une référence de l'algorithme de routage sélectionné).

Au contraire, si l'identifiant de l'algorithme de routage utilisé est le même que celui de l'algorithme de routage sélectionné (étape 510), des étapes sont effectuées pour estimer une valeur représentative de l'équilibrage du routage d'un cluster et, le cas échéant, alerter un administrateur d'un potentiel déséquilibre. Ces étapes, référencées 400' à 420', peuvent être similaires aux étapes 400 à 420 décrites en référence à la figure 4.

Comme décrit précédemment, l'étape 400' a pour objet la sélection automatique, semi-automatique ou manuelle d'un ou plusieurs commutateurs Ci (i variant de 1 au nombre NbC de commutateurs sélectionnés). La table de routage (TRi) associée à chaque commutateur sélectionné est obtenue au cours d'une étape suivante (étape 405') étant à nouveau observé ici que si l'algorithme est mis en oeuvre dans un gestionnaire InfiniBand, l'obtention de ces tables est rendue particulièrement aisée du fait que c'est le gestionnaire InfiniBand qui les détermine. Si l'algorithme est mis en oeuvre dans un autre module, l'obtention des tables de routage peut être effectuée par requêtes auprès des commutateurs concernés, auprès du ou des modules les ayant créées ou auprès de tout autre dispositif les mémorisant.

Pour chaque commutateur sélectionné, le nombre de routes par port NbRij (j variant de 1 au nombre NbPi de ports du commutateur Ci) est ici calculé à partir de la table de routage associée à ce commutateur (étape 410'). Comme indiqué précédemment, le nombre de routes par lien peut être déterminé en comptant le nombre d'indications de destination (LID) différentes associées à un même port d'un commutateur.

Le nombre moyen de routes par port NbR est ensuite calculé pour l'ensemble des commutateurs sélectionnés (étape 415'). A nouveau, ce nombre est typiquement calculé selon la relation suivante :

$$NbR = \frac{\sum_{i=1}^{NbC} \sum_{j=1}^{NbPi} NbRij}{\sum_{i=1}^{NbC} NbPi}$$

la granularité de la valeur représentative de l'équilibrage du routage du cluster étant déterminée par l'ensemble des commutateurs sélectionnés.

Dans une étape suivante, le nombre de routes NbRij pour chaque port j de chaque commutateur i est comparé au nombre NbR moyen de routes par port (étape 420').

Si la différence entre le nombre de routes NbRij du port j du commutateur i et le nombre NbR moyen de routes par port excède un seuil θ, il est considéré que le cluster que le routage du cluster est déséquilibré. Dans ce cas, une notification est adressée à un administrateur (étape 515), par exemple sous forme de message électronique. A nouveau, la notification peut comprendre une indication relative au(x) commutateur(s) et, éventuellement, au(x) port(s) de ce ou ces derniers, pour lequel un problème potentiel est détecté.

Ici encore, il est possible de ne détecter que les surcharges (NbRij - NbR > θ), les sous-charges (NbR - NbRij > θ), ou encore les surcharges et les sous-charges avec des seuils différents (NbRij - NbR > $\theta_1$ ou NbR - NbRij > $\theta_2$).

Comme illustré sur la figure 5, l'algorithme boucle de préférence sur lui-même jusqu'à ce qu'il lui soit mis fin. Il permet ainsi d'alerter un administrateur s'il existe un risque de routage ne permettant pas l'exploitation d'un cluster dans ses meilleures conditions au cours de l'utilisation de ce dernier.

Il convient de noter que les algorithmes décrits en référence aux figures 4 et 5 peuvent, par exemple, être mis en oeuvre dans un dispositif similaire à celui décrit en référence à la figure 2, sous forme d'un programme d'ordinateur.

Naturellement, pour satisfaire des besoins spécifiques, une personne compétente dans le domaine de l'invention pourra appliquer des modifications dans la description précédente.

ANNEXE

Table 1

| LID | Réf. port |
|---|---|
| 2 | 19 |
| 4 | 21 |
| 5 | 19 |
| 7 | 21 |
| 8 | 21 |
| 10 | 22 |
| 11 | 23 |
| 12 | 10 |
| 15 | 19 |
| 17 | 21 |
| 18 | 7 |
| 20 | 21 |

(suite)

| LID | Réf. port |
|---|---|
| 25 | 9 |
| 28 | 25 |
| 31 | 32 |

Table 2

| Réf. port | Nb routes |
|---|---|
| 7 | 1 |
| 9 | 1 |
| 10 | 1 |
| 19 | 3 |
| 21 | 5 |
| 22 | 1 |
| 23 | 1 |
| 25 | 1 |
| 32 | 1 |

**Revendications**

1. Procédé pour ordinateur de surveillance d'au moins un paramètre de routage d'un cluster comprenant une pluralité de noeuds et une pluralité de commutateurs, des liens de communication statiques reliant des noeuds et des commutateurs desdites pluralités de noeuds et de commutateurs, chaque commutateur comprenant une pluralité de ports de sortie, ce procédé étant **caractérisé en ce qu'**il comprend les étapes suivantes,

   - sélection (400) d'au moins un commutateur de ladite pluralité de commutateurs ;
   - calcul (410) d'un nombre de routes par port pour chaque port de chaque commutateur sélectionné, des routes étant définies lors d'une étape de routage pour relier chacune un noeud à un autre ;
   - calcul (415) d'un nombre moyen de routes par port pour le au moins un commutateur sélectionné ;
   - comparaison (420) de chaque nombre de routes par port calculé avec le nombre moyen de routes par port calculé ; et
   - en réponse à ladite comparaison, notification (425) d'un déséquilibre potentiel de routage dudit cluster.

2. Procédé selon la revendication 1 selon lequel chaque commutateur comprend une table de routage pour identifier un port selon une caractéristique d'un paquet de données reçu, le procédé comprenant en outre une étape d'obtention (405) d'une table de routage pour chaque commutateur sélectionné, ladite étape de calcul d'un nombre de routes par port pour chaque port de chaque commutateur sélectionné étant basée sur une table de routage obtenue pour chaque commutateur sélectionné.

3. Procédé selon la revendication 1 ou la revendication 2 selon lequel ladite étape de comparaison de chaque nombre de routes par port avec le nombre moyen de routes par port comprend une étape de calcul de la différence de chaque nombre de routes par port avec le nombre moyen de routes par port et une étape de comparaison de la différence avec au moins un seuil.

4. Procédé selon la revendication 3 selon lequel ladite étape de calcul de la différence de chaque nombre de routes par port avec le nombre moyen de routes par port est une étape de calcul de la valeur absolue de la différence de chaque nombre de routes par port avec le nombre moyen de routes par port.

5. Procédé selon la revendication 3 selon lequel la différence entre chaque nombre de routes par port avec le nombre moyen de routes par port est considérée comme étant nulle si elle est négative.

6. Procédé selon la revendication 3 selon lequel ladite comparaison de la différence avec au moins un seuil comprend une étape de sélection d'un premier ou d'un second seuil selon que la différence est positive ou négative.

7. Procédé selon l'une quelconque des revendications 1 à 6 comprenant en outre les étapes suivantes :

    - identification (500) d'un algorithme sélectionné pour router ledit cluster ;
    - identification (505) d'un algorithme utilisé pour router ledit cluster ; et
    - si les identifiants dudit algorithme sélectionné et dudit algorithme utilisé pour router ledit cluster sont différents, notification (515) d'un problème potentiel d'optimisation de routage dudit cluster.

8. Procédé selon l'une quelconque des revendications 1 à 7 selon lequel le procédé boucle sur lui-même pour identifier un problème potentiel de routage dudit cluster.

9. Procédé selon l'une quelconque des revendications 1 à 8, le procédé étant mis en oeuvre dans un gestionnaire de cluster de type InfiniBand.

10. Programme d'ordinateur comprenant des instructions adaptées à la mise en oeuvre de chacune des étapes du procédé selon l'une quelconque des revendications précédentes lorsque ledit programme est exécuté sur un ordinateur.

**Patentansprüche**

1. Verfahren für einen Rechner zur Überwachung mindestens eines Routing-Parameters eines Clusters, der mehrere Knoten und mehrere Switches umfasst, wobei statische Kommunikationsverbindungen die Knoten und Switches der mehreren Knoten und Switches verbinden, wobei jeder Switch mehrere Ausgangsports umfasst, wobei dieses Verfahren **dadurch gekennzeichnet ist, dass** es die folgenden Schritte umfasst:

    - Auswählen (400) mindestens eines Switches der mehreren Switches;
    - Berechnen (410) einer Anzahl von Routen pro Port für jeden Port jedes ausgewählten Switches, wobei die Routen bei einem Routing-Schritt definiert werden, um jeweils einen Knoten mit einem anderen zu verbinden;
    - Berechnen (415) einer mittleren Anzahl von Routen pro Port für den mindestens einen ausgewählten Switch;
    - Vergleichen (420) jeder berechneten Anzahl von Routen pro Port mit der berechneten mittleren Anzahl von Routen pro Port; und
    - im Ansprechen auf den Vergleich, Mitteilen (425) eines potentiellen Routing-Ungleichgewichts des Clusters.

2. Verfahren nach Anspruch 1, wobei jeder Switch eine Routing-Tabelle umfasst, um einen Port entsprechend einem kennzeichnenden Merkmal eines empfangenen Datenpakets zu identifizieren, wobei das Verfahren darüber hinaus einen Schritt zum Erlangen (405) einer Routing-Tabelle für jeden ausgewählten Switch umfasst, wobei der Schritt des Berechnens einer Anzahl von Routen pro Port für jeden Port jedes ausgewählten Switches auf einer Routing-Tabelle beruht, die für jeden ausgewählten Switch erlangt wurde.

3. Verfahren nach Anspruch 1 oder Anspruch 2, wobei der Schritt des Vergleichens jeder Anzahl von Routen pro Port mit der mittleren Anzahl von Routen pro Port einen Schritt eines Berechnens der Differenz zwischen jeder Anzahl von Routen pro Port und der mittleren Anzahl von Routen pro Port und einen Schritt eines Vergleichens der Differenz mit mindestens einem Schwellenwert umfasst.

4. Verfahren nach Anspruch 3, wobei der Schritt des Berechnens der Differenz zwischen jeder Anzahl von Routen pro Port und der mittleren Anzahl von Routen pro Port ein Schritt des Berechnens des Absolutwerts der Differenz zwischen jeder Anzahl von Routen pro Port und der mittleren Anzahl von Routen pro Port ist.

5. Verfahren nach Anspruch 3, wobei die Differenz zwischen jeder Anzahl von Routen pro Port und der mittleren Anzahl von Routen pro Port als Null betragend erachtet wird, wenn sie negativ ist.

6. Verfahren nach Anspruch 3, wobei das Vergleichen der Differenz mit mindestens einem Schwellenwert, je nachdem, ob die Differenz positiv oder negativ ist, einen Schritt eines Auswählens eines ersten oder eines zweiten Schwellenwerts umfasst.

7. Verfahren nach einem der Ansprüche 1 bis 6, darüber hinaus die folgenden Schritte umfassend:

   - Identifizieren (500) eines zum Routen des Clusters ausgewählten Algorithmus;
   - Identifizieren (505) eines zum Routen des Clusters verwendeten Algorithmus; und
   - wenn die Kennungen des zum Routen des Clusters ausgewählten Algorithmus und des zum Routen des Clusters verwendeten Algorithmus unterschiedlich sind, Mitteilen (515) eines potentiellen Routing-Optimierungsproblems des Clusters.

8. Verfahren nach einem der Ansprüche 1 bis 7, wobei das Verfahren in sich selbst eine Schleife bildet, um ein potentielles Routing-Problem des Clusters zu identifizieren.

9. Verfahren nach einem der Ansprüche 1 bis 8, wobei das Verfahren in einem Cluster-Manager des Typs InfiniBand umgesetzt wird.

10. Rechnerprogramm mit Anweisungen, die, wenn das Programm auf einem Rechner abläuft, zum Umsetzen jedes der Schritte des Verfahrens nach einem der vorhergehenden Ansprüche angepasst sind.

**Claims**

1. A computer method for monitoring at least one routing parameter of a cluster comprising a plurality of nodes and a plurality of switches, static communication links linking nodes and switches of said pluralities of nodes and switches, each switch comprising a plurality of output ports, this method being **characterized in that** it comprises the following steps,

   - selecting (400) at least one switch from said plurality of switches;
   - computing (410) a number of routes per port for each port of each selected switch, routes being defined at a routing step for each to link one node to another;
   - computing (415) an average number of routes per port for the at least one selected switch;
   - performing comparison (420) of each computed number of routes per port with the computed average number of routes per port; and
   - in response to said comparison, providing notification (425) of a potential routing imbalance of said cluster.

2. A method according to claim 1, wherein each switch comprises a routing table to identify a port according to a feature of a received data packet, the method further comprising a step of obtaining (405) a routing table for each selected switch, said step of computing a number of routes per port for each port of each selected switch being based on a routing table obtained for each selected switch.

3. A method according to claim 1 or claim 2 wherein said step of comparing each number of routes per port with the average number of routes per port comprises a step of computing the difference of each number of routes per port compared with the average number of routes per port and a step of comparing the difference with at least one threshold.

4. A method according to claim 3, wherein said step of computing the difference of each number of routes per port compared with the average number of routes per port is a step of computing the absolute value of the difference of each number of routes per port compared with the average number of routes per port.

5. A method according to claim 3, wherein the difference of each number of routes per port compared with the average number of routes per port is considered as being null if it is negative.

6. A method according to claim 3, wherein said comparison of the difference with at least one threshold comprises a step of selecting a first or a second threshold depending on whether the difference is positive or negative.

7. A method according to any one of the claims 1 to 6 further comprising the following steps:

   - identifying (500) an algorithm selected to route said cluster;
   - identifying (505) an algorithm used to route said cluster; and
   - if the identifiers of said algorithm selected and said algorithm used to route said cluster are different, providing notification (515) of a potential problem of routing optimization of said cluster.

8. A method according to any one of claims 1 to 7 wherein the method loops back on itself to identify a potential routing problem of said cluster.

9. A method according to any one of claims 1 to 8, the method being implemented in a cluster manager of InfiniBand type.

10. A computer program comprising instructions adapted for the carrying out of each of the steps of the method according to any one of the preceding claims when said program is executed on a computer.

Fig.1

EP 3 189 636 B1

| RAM | RAM | RAM | RAM |~206 |
| CPU | CPU | CPU | CPU |~204 |

202~

Interfaces de
communication

208~

Stockage interne
(Disque dur)

210~

200

## Fig.2

Fig. 3a

Fig. 3b

EP 3 189 636 B1

| | |
|---|---|
| 400 | Sélection commutateur(s) Ci |
| 405 | Obtention table de routage TRi pour commutateur(s) Ci |
| 410 | Calcul nombre de routes NbRij par port Pij pour commutateur(s) Ci |
| 415 | Calcul nombre de routes NbR moyen par port |
| 420 | $|NbRij - NbR| > \Theta$ ? |
| 425 | Notification administrateur |

Oui        Non

Fig. 4

```
                    ┌─────────────────────────────┐
                    │ Identification de l'algorithme de │
        500 ────────│  routage sélectionné (ARS)  │
                    └─────────────────────────────┘
                                  │
                                  ▼
                    ┌─────────────────────────────┐
                    │ Identification de l'algorithme de │
        505 ────────│   routage utilisé (ARU)     │
                    └─────────────────────────────┘
                                  │
                                  ▼
        Non    ╱─────────────────────────────╲   Oui
          ◄────│         ARU = ARS ?           │────►
        510 ───╲─────────────────────────────╱
                                  │
                                  ▼
                    ┌─────────────────────────────┐
                    │         Sélection           │
        400' ───────│     commutateur(s) Ci       │
                    └─────────────────────────────┘
                                  │
                                  ▼
                    ┌─────────────────────────────┐
                    │  Obtention table de routage │
        405' ───────│   TRi pour commutateur(s) Ci│
                    └─────────────────────────────┘
                                  │
                                  ▼
                    ┌─────────────────────────────┐
                    │  Calcul nombre de routes NbRij │
        410' ───────│  par port Pij pour commutateur(s) Ci│
                    └─────────────────────────────┘
                                  │
                                  ▼
                    ┌─────────────────────────────┐
                    │  Calcul nombre de routes NbR │
        415' ───────│      moyen par port         │
                    └─────────────────────────────┘
                                  │
                                  ▼
        Oui    ╱─────────────────────────────╲   ┌─ 420'
          ◄────│      |NbRij - NbR| > Θ ?       │
               ╲─────────────────────────────╱   Non
                                  │
                                  ▼
                    ┌─────────────────────────────┐
                    │        Notification         │
        515 ────────│       administrateur         │
                    └─────────────────────────────┘
```

Identification de l'algorithme de routage sélectionné (ARS)

Identification de l'algorithme de routage utilisé (ARU)

ARU = ARS ?

Sélection commutateur(s) Ci

Obtention table de routage TRi pour commutateur(s) Ci

Calcul nombre de routes NbRij par port Pij pour commutateur(s) Ci

Calcul nombre de routes NbR moyen par port

$|NbRij - NbR| > \Theta$ ?

Notification administrateur

Fig. 5

**EP 3 189 636 B1**

**RÉFÉRENCES CITÉES DANS LA DESCRIPTION**

**Documents brevets cités dans la description**

- WO 2011144848 A